# EUROPÄISCHE PATENTSCHRIFT

(11) **EP 3 551 860 B1**
(45) Veröffentlichungstag und Bekanntmachung des Hinweises auf die Patenterteilung: **17.02.2021**
(21) Anmeldenummer: 17811280.1
(22) Anmeldetag: 05.12.2017
(51) Int. Cl.: F01N 11/00, G01D 18/00

(54) **VERFAHREN UND STEUERGERÄT ZUM ÜBERWACHEN EINER SENSORFUNKTION EINES SENSORS IN EINEM EGO-FAHRZEUG**
METHOD AND CONTROL DEVICE FOR MONITORING THE FUNCTIONING OF A SENSOR IN AN EGO-VEHICLE
PROCÉDÉ ET APPAREIL DE COMMANDE POUR SURVEILLER LE FONCTIONNEMENT DE DÉTECTEURS DANS UN EGO-VÉHICULE

(30) Priorität: 07.12.2016 DE 102016224378
(43) Veröffentlichungstag der Anmeldung: 16.10.2019
(73) Patentinhaber: Volkswagen Aktiengesellschaft, 38440 Wolfsburg (DE)
(72) Erfinder: CASSEBAUM, Oliver, 38448 Wolfsburg (DE); NITZKE, Hans-Georg, 38547 Wettmershagen (DE)
(74) Vertreter: MFG Patentanwälte Meyer-Wildhagen Meggle-Freund Gerhard PartG mbB
(86) Internationale Anmeldenummer: PCT/EP2017/081509
(87) Internationale Veröffentlichungsnummer: WO 2018/104296

(56) Entgegenhaltungen:
- EP-A1- 3 115 745
- DE-A1-102014 219 382
- DE-A1-102016 102 092
- US-A1- 2015 362 384

## Beschreibung

Die Erfindung betrifft ein Verfahren und ein Steuergerät zum Überwachen einer Sensorfunktion eines Sensors in einem Ego-Fahrzeug. Weiterhin betrifft die Erfindung ein Kraftfahrzeug mit einem erfindungsgemäßen Steuergerät und eine Backendeinrichtung mit einem erfindungsgemäßen Steuergerät.

Typischerweise umfasst jedes Kraftfahrzeug eine Vielzahl an Sensoren, beispielsweise Temperatursensoren, Drucksensoren, Abgasemissionssensoren wie Sickoxidsensoren und Partikelsensoren, Lambdasonden und andere Sensoren. Im Laufe der Zeit verschiebt sich das Verhalten von Sensoren im Feld, so dass diese nachkalibriert bzw. adaptiert oder sogar ausgetauscht werden müssen.

Zur Kalibrierung bzw. Beurteilung der Funktion des jeweiligen Sensors ist in dem den Sensor aufweisenden Fahrzeug (Ego-Fahrzeug) häufig ein Alternativsensor verbaut, der einen Referenzwert liefert. Alternativ kann, wie beispielsweise in der EP 1 187 670 A1 beschrieben, anhand von Modellen ein Referenzwert erzeugt werden.

Allerdings können die Referenzwerte fehlerbehaftet sein, was zu Fehlsteuerungen des Fahrzeugs und gegebenenfalls sogar dazu führen kann, dass das Fahrzeug nicht mehr gestartet oder nur noch in einem Notlauf betrieben werden kann. Zudem stellen die zusätzlichen Alternativsensoren einen erhöhten Montage-, Steuer- und Kostenaufwand dar.

US 2016/245716 A1 betrifft ein Verfahren zum Kalibrieren eines Luftdrucksensors. Der Luftdrucksensor wird dazu an einen Ort mit bekannter Höheninformation gebracht und auf Grundlage der bekannten Höheninformation kalibriert. US 2015/0356796 A1 beschreibt ein Verfahren zum Übermitteln von Straßenverhältnissen entlang einer Route. Dabei findet jedoch keine Überwachung einer Sensorfunktionalität statt.

Die US 2015/0362384 A1 beschreibt ein elektronisches Gerät mit einem Sensor, beispielsweise einem Temperatursensor, wobei ein von dem Sensor gemessener Wert mittels eines

### Volkswagen Aktiengesellschaft

Referenzwertes, der von einem benachbart befindlichen externen Gerät empfangen wird, angepasst wird. Allerdings hängt das Ergebnis vollständig von der Qualität des Referenzwerts ab.

Die EP 3 115 745 A1 beschreibt ein Warnsystem für ein Fahrzeug, das den Fahrer vor Zusammenstößen warnen soll. Dazu werden von dem Fahrzeug und einem Kollisionsobjekt GPS-Daten, die eine horizontale Lage dieser angeben, und zugehörige Luftdruckdaten, die eine Höhenlage dieser angeben, bereitgestellt, aus denen die genaue Position des Fahrzeugs sowie des Kollisionsobjekts bestimmt wird. Die Luftdruckdaten, die von einem Luftdrucksensor des Fahrzeugs gemessen wurden, können mit Luftdruckdaten eines oder mehrere anderer Luftdrucksensoren verglichen werden und der Luftdrucksensor kann bei Bedarf auf Grundlage der Unterschiede zu den Luftdruckdaten der anderen Luftdrucksensoren kalibriert werden.

Die DE 10 2016 102 092 A1 beschreibt ein Fahrzeugsensorsystem mit einem ersten Drucksensor zum Messen eines Drucks in einem Airbag oder einem Verbrennungstrakt und einem zweiten Drucksensor, der einen Referenzdruck bereitstellt. Der erste Drucksensor wird mittels des Referenzdrucks kalibriert.

Aufgabe der vorliegenden Erfindung ist es, ein Verfahren und ein Steuergerät zum Überwachen einer Sensorfunktion eines Sensors in einem Ego-Fahrzeug bereitzustellen, die die oben genannten Nachteile wenigstens teilweise überwinden.

Diese Aufgabe wird durch das erfindungsgemäße Verfahren zum Überwachen einer Sensorfunktion eines Sensors in einem Ego-Fahrzeug nach Anspruch 1 und das erfindungsgemäße Steuergerät zum Überwachen einer Sensorfunktion eines Sensors in einem Ego-Fahrzeug nach Anspruch 9 gelöst.

Gemäß einem ersten Aspekt betrifft die vorliegende Erfindung ein Verfahren nach dem Anspruch 1 zum Überwachen einer Sensorfunktion eines Sensors in einem Ego-Fahrzeug.

### Volkswagen Aktiengesellschaft

Gemäß einem zweiten Aspekt betrifft die vorliegende Erfindung ein Steuergerät zum Überwachen einer Sensorfunktion eines Sensors in einem Ego-Fahrzeug, das dazu ausgebildet ist, ein Verfahren nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft ein Verfahren zum Überwachen einer Sensorfunktion eines Sensors, beispielsweise eines Emissionssensors oder eines umgebungserfassenden Sensors, in einem Ego-Fahrzeug bzw. in einem den Sensor aufweisenden Fahrzeug. Das Ego-Fahrzeug ist vorzugsweise ein Kraftfahrzeug, beispielsweise ein Kraftfahrzeug mit einer Verbrennungskraftmaschine, beispielsweise einem Ottomotor oder einem Dieselmotor, mit einem Elektroantrieb und/oder mit einem anderen Antrieb.

Gemäß dem erfindungsgemäßen Verfahren werden Sensordaten des Sensors mit Vergleichsdaten eines außerhalb des Ego-Fahrzeugs befindlichen Vergleichssensors, insbesondere mindestens eines außerhalb des Ego-Fahrzeugs befindlichen Vergleichssensors, vergleichen. Der Vergleichssensor kann ein Sensor derselben Art oder sogar desselben Typs wie der Sensor in dem Ego-Fahrzeug sein. Der Vergleichssensor kann dabei in einem Fremdfahrzeug angeordnet sein oder fest stationiert sein, beispielsweise in eine externe Messstation oder eine Wetterstation integriert sein. So können Umweltdaten, beispielsweise von Behörden in der Nähe der Fahrzeuge für die Sensorüberwachung genutzt werden.

Die Sensordaten können in einer aktuellen Position (Verweilposition) des Ego-Fahrzeugs erfasst werden, d.h. während der Messung der Sensordaten befindet sich das Ego-Fahrzeug an der aktuellen Position. Die Vergleichsdaten können erfasst sein, während sich der Vergleichssensor in einem vorgegebenen Bereich um die aktuelle Position (Verweilposition) des Ego-Fahrzeugs befindet. Der vorgegebene Bereich kann ein Bereich um die aktuelle Position sein, in dem eine mit dem Sensor in dem Ego-Fahrzeug zu bestimmende Eigenschaft ähnlich oder gleich ist. Entsprechend kann der vorgegebene Bereich von der Art des Sensors in dem Ego-Fahrzeug bzw. von der mit dem Sensor in dem Ego-Fahrzeug zu bestimmenden Eigenschaft abhängig sein. Vorzugsweise kann der vorgegebene Bereich für einen Emissionssensor, beispielsweise einen Stickoxidsensor (NOx-Sensor), kleiner sein als für einen umgebungserfassenden Sensor, beispielsweise einen Temperatursensor. Beispielsweise kann der vorgegebene Bereich ein Umkreis von 100 m oder weniger, insbesondere 50 m oder weniger, um die aktuelle Position sein. Alternativ kann der vorgegebene Bereich einer Ausdehnung eines Parkplatzes oder einem Teilbereich eines Parkplatzes entsprechen. Um festzustellen, ob sich der Vergleichssensor innerhalb des vorgegebenen Bereichs um die aktuelle Position befindet, können Positionsdaten des Ego-Fahrzeugs und Positionsdaten des Vergleichssensors oder eines den Vergleichssensor umfassenden Fremdfahrzeugs ausgewertet werden. Die Positionsdaten des Ego-Fahrzeugs und/oder des Vergleichssensors bzw. des Fremdfahrzeugs können beispielsweise GPS-Daten umfassen.

Gemäß dem erfindungsgemäßen Verfahren wird nach dem Vergleichen der Sensordaten mit den Vergleichsdaten die Sensorfunktion des Sensors in dem Ego-Fahrzeug in Abhängigkeit eines Vergleichsergebnisses der Sensordaten mit den Vergleichsdaten beurteilt. Beispielsweise kann bestimmt werden, ob ein Abstand der Sensordaten von den Vergleichsdaten kleiner als ein vorgegebener Abstand ist und die Sensorfunktion in Ordnung ist oder ob ein Abstand der Sensordaten von den Vergleichsdaten größer als der vorgegebene Abstand ist und die Sensorfunktion nicht in Ordnung ist.

Durch die Nutzung von Schwarmdaten bzw. Big-Data-Informationen von Vergleichssensoren, die ohnehin insbesondere von Fremdfahrzeugen zur Verfügung gestellt werden, können somit Referenzdaten für die Überwachung der Sensorfunktion des Sensors in dem Ego-Fahrzeug erhalten werden. Damit wird die Bestimmung von Referenzwerten mittels Alternativsensoren in dem Ego-Fahrzeug oder über Modelle überflüssig. Zudem ist die Qualität der aus Schwarmdaten bestimmten Referenzdaten im Vergleich zu den von Alternativsensoren bzw. durch Modellrechnung erhaltenen Referenzwerten gesteigert.

Das Verfahren kann weiterhin das Empfangen der Vergleichsdaten umfassen. Die Vergleichsdaten können von dem Vergleichssensor erfasst bzw. gemessen werden und zeitgleich, also direkt von dem Vergleichssensor, empfangen werden oder in einem Speicher zwischengespeichert werden und von dem Speicher abgerufen werden. Weiterhin kann das Verfahren das Empfangen der Sensordaten und gegebenenfalls auch das Erfassen, insbesondere das Messen, der Sensordaten umfassen. Die Sensordaten können vorzugsweise von dem Sensor erfasst bzw. gemessen werden und zeitgleich, also direkt von dem Sensor, empfangen werden.

Die Sensordaten können erfasst werden, während das Ego-Fahrzeug in der aktuellen Position stillsteht. Die Vergleichsdaten können dann erfasst sein, während sich der Vergleichssensor an einer festen Position befindet oder sich innerhalb des vorgegebenen Bereichs um die aktuelle Position bewegt. Wenn sich der Vergleichssensor beispielsweise in einem Fremdfahrzeug befindet, können die Vergleichsdaten erfasst sein, während das Fremdfahrzeug innerhalb des vorgegebenen Bereichs um die aktuelle Position stillsteht oder sich innerhalb des vorgegebenen Bereichs um die aktuelle Position bewegt.

Alternativ können die Sensordaten erfasst werden, während das Ego-Fahrzeug die aktuelle Position passiert. Die Vergleichsdaten können dann erfasst sein, während sich der Vergleichssensor an einer festen Position in dem vorgegebenen Bereich befindet oder sich innerhalb des vorgegebenen Bereichs bewegt. Wenn sich der Vergleichssensor beispielsweise in einem Fremdfahrzeug befindet, können die Vergleichsdaten erfasst sein, während das Fremdfahrzeug innerhalb des vorgegebenen Bereichs um die aktuelle Position stillsteht oder sich innerhalb des vorgegebenen Bereichs um die aktuelle Position bewegt.

In manchen Ausführungsbeispielen können die Sensordaten erfasst werden, während eine Verbrennungskraftmaschine des Ego-Fahrzeugs abgeschaltet und/oder abgekoppelt ist. Wenn sich der Vergleichssensor in einem Fremdfahrzeug befindet, können die Vergleichsdaten erfasst sein, während eine Verbrennungskraftmaschine des Fremdfahrzeugs abgeschaltet und/oder abgekoppelt ist. Insbesondere, wenn ein Emissionssensor mit dem erfindungsgemäßen Verfahren überwacht wird, kann die jeweilige Verbrennungskraftmaschine beim Erfassen der Sensordaten bzw. der Vergleichsdaten abgeschaltet und/oder abgekoppelt sein. Wenn die Verbrennungskraftmaschine abgeschaltet ist und keine Emissionen abgibt, erfasst ein im Abgastrakt des Antriebsstrangs angeordnete Emissionssensor, wenn er mit der Umgebung verbunden ist, lediglich eine Abgasbelastung in der Umgebung, die innerhalb des vorgegebenen Bereichs um den Sensor, beispielsweise im Bereich eines Parkplatzes mit mehreren Parklücken, im Wesentlichen gleich sind. Wenn auch die Vergleichssensoren, lediglich die Abgasbelastung in der Umgebung erfassen, lassen sich die Sensordaten und die Vergleichsdaten sinnvoll vergleichen.

Zum Beispiel kann sich das Ego-Fahrzeug während der Erfassung der Sensordaten bei abgeschalteter und abgekoppelter Verbrennungskraftmaschine fortbewegen, insbesondere segeln oder, wenn das Ego-Fahrzeug ein Hybridfahrzeug ist, elektrisch fahren oder stillstehen. Alternativ kann sich das Ego-Fahrzeug während der Erfassung der Sensordaten im Leerlauf befinden, wobei es sich bei abgekoppelter Verbrennungskraftmaschine fortbewegt oder stillsteht. Entsprechend kann sich ein Fremdfahrzeug, das den Vergleichssensor aufweist, während der Erfassung der Vergleichsdaten bei abgeschalteter und abgekoppelter Verbrennungskraftmaschine fortbewegen, insbesondere segeln oder, wenn das Fremdfahrzeug ein Hybridfahrzeug ist, elektrisch fahren oder stillstehen. Alternativ kann sich das Fremdfahrzeug während der Erfassung der Vergleichsdaten im Leerlauf befinden, wobei es sich bei abgekoppelter Verbrennungskraftmaschine fortbewegt oder stillsteht.

Alternativ können die Sensordaten erfasst werden, während die Verbrennungskraftmaschine des Ego-Fahrzeugs das Ego-Fahrzeug antreibt. Entsprechend können die Vergleichsdaten erfasst sein, während die Verbrennungskraftmaschine des Fremdfahrzeugs das Fremdfahrzeug antreibt. Insbesondere, wenn ein Sensor, der außerhalb eines Abgastrakts des Ego-Fahrzeugs angeordnet ist, mit dem erfindungsgemäßen Verfahren überwacht wird, können die Sensordaten bzw. die Vergleichsdaten unabhängig von einem Betriebsmodus des Ego-Fahrzeugs bzw. des Fremdfahrzeugs erfasst werden.

In manchen Ausführungsbeispielen können die Sensordaten parallel, d.h. zeitgleich, zu den Vergleichsdaten erfasst sein. Die Sensordaten und die Vergleichsdaten können also erfasst werden, während sich der Sensor des Ego-Fahrzeugs an der aktuellen Position befindet und während sich der Vergleichssensor an einer festen Position befindet, beispielsweise während das Fremdfahrzeug, in dem sich der Vergleichssensor befindet, innerhalb des vorgegebenen Bereichs um die aktuelle Position stillsteht.

Alternativ können die Sensordaten zeitversetzt zu den Vergleichsdaten erfasst sein. Die Vergleichsdaten können also erfasst worden sein, während sich der Vergleichssensor an einer festen Position befunden hat, beispielsweise während das Fremdfahrzeug, in dem sich der Vergleichssensor befindet, innerhalb des vorgegebenen Bereichs um die aktuelle Position stillstand.

Vorzugsweise können die Sensordaten gemessen werden, wenn das Fahrzeug für eine vorgegebene Zeitspanne an der aktuellen Position abgestellt ist. Vorzugsweise kann dabei eine Antriebsmaschine des Ego-Fahrzeugs, beispielsweise eine Verbrennungskraftmaschine oder ein Elektroantrieb, abgeschaltet sein. Entsprechend können die Vergleichsdaten gemessen werden, wenn das Fremdfahrzeug für die vorgegebene Zeitspanne an einer festen Position in dem vorgegebenen Bereich um die aktuelle Position abgestellt ist. Vorzugsweise kann dabei eine Antriebsmaschine des Fremdfahrzeugs, beispielsweise eine Verbrennungskraftmaschine oder ein Elektroantrieb, abgeschaltet sein. Die vorgegebene Zeitspanne kann in Abhängigkeit der Art des Sensors des Ego-Fahrzeugs variieren. Entsprechend kann bei schnell reagierenden Sensoren, beispielsweise NOx-Sensoren, eine Zeitspanne von 1 min oder mehr ausreichen, während bei trägen Sensoren, beispielsweise Temperatursensoren, eine Zeitspanne von 30 min oder mehr nötig sein kann.

Durch die Messung der Sensordaten und der Vergleichsdaten nach einem längeren Stillstand der Fahrzeuge können Fehler verhindert werden, die durch den Betrieb des Fahrzeugs bedingt sein können, beispielsweise aufgrund eines Rest-Stickoxidgehalts in einem Abgaskanal der Verbrennungskraftmaschine oder einer Wärmeabstrahlung infolge des Betriebs der Verbrennungskraftmaschine.

Alternativ oder zusätzlich können die Sensordaten erfasst werden, während sich die Antriebsmaschine des Ego-Fahrzeugs beispielsweise bei Stillstand oder während der Fahrt des Ego-Fahrzeugs in einem vorgegebenen Arbeitspunkt befindet, beispielsweise im Leerlauf oder während des Segelns. Entsprechend können die Vergleichsdaten erfasst werden, während sich die Antriebsmaschine des Fremdfahrzeugs beispielsweise bei Stillstand oder während der Fahrt des Fremdfahrzeugs in einem Arbeitspunkt befindet, der dem vorgegebenen Arbeitspunkt des Ego-Fahrzeugs entspricht, beispielsweise im Leerlauf oder während des Segelns.

Durch das Einstellen verschiedener Arbeitspunkte der Antriebsmaschine, können unterschiedliche Bedingungen an einem Sensorort herrschen, die die zu messende Eigenschaft beeinflussen, so dass auch eine Form einer Sensorkennlinie überwacht werden kann und gegebenenfalls kalibriert werden kann. Beispielsweise kann eine Sensorkennlinie eines Ladedrucksensors überwacht werden, indem ein Ladedruck im Leerlauf und ein Ladedruck bei abgeschalteter Verbrennungskraftmaschine gemessen werden und die gemessenen Werte gemäß dem erfindungsgemäßen Verfahren überwacht werden. Bei baugleichen Fahrzeugen (inkl. Antriebsstrang) kann bei gleichen Umgebungsbedingungen bei gleicher Einstellung eines Abgasturboladers auch der gleiche Ladedruck vorherrschen. So ist es möglich, auch die Kennlinienform anzupassen.

Die Sensordaten können beispielsweise einen Messwert, eine Messreihe mit einer Vielzahl an Messwerten oder einen Messverlauf mit zeitlich aufeinanderfolgenden Messwerten umfassen oder daraus bestehen. Entsprechend können die Vergleichsdaten jedes Vergleichssensors einen Messwert, eine Messreihe mit einer Vielzahl an Messwerten oder einen Messverlauf mit zeitlich aufeinanderfolgenden Messwerten umfassen oder daraus bestehen. Die Art der Sensordaten und der Vergleichsdaten kann beispielsweise von der Art des Sensors des Ego-Fahrzeugs und des Vergleichssensors abhängig sein.

In manchen Ausführungsbeispielen können die Sensordaten eine Messreihe oder einen Messverlauf mit einer Vielzahl an Messwerten umfassen. In diesem Fall kann eine statistische Auswertung erfolgen. Zum Beispiel kann ein Mittelwert über alle Messwerte gebildet werden. Alternativ kann ein Mittelwert über ausgewählte Messwerte gebildet werden, wobei die ausgewählten Messwerte in einem vorgegebenen Bereich liegen oder eine Abweichung von einem Erwartungswert aufweisen, die geringer als eine vorgegebene Abweichung ist. Der vorgegebene Bereich kann beispielsweise ein Bereich sein, in dem zwischen 50 % und 90% aller Messwerte liegen. Die vorgegebene Abweichung kann beispielsweise 10% oder weniger des Erwartungswerts betragen. Alternativ kann auch ein Median über alle oder ausgewählte Messwerte gebildet werden.

Entsprechend oder alternativ können die Vergleichsdaten eine Vergleichsmessreihe oder einen Vergleichsmessverlauf mit einer Vielzahl an Vergleichsmesswerten umfassen. In diesem Fall kann eine statistische Auswertung erfolgen. Zum Beispiel kann ein Mittelwert über alle Vergleichsmesswerte gebildet werden. Alternativ kann ein Mittelwert über ausgewählte Vergleichsmesswerte gebildet werden, wobei die ausgewählten Vergleichsmesswerte in einem vorgegebenen Bereich liegen oder eine Abweichung von einem Erwartungswert aufweisen, die geringer als eine vorgegebene Abweichung ist. Wiederum kann der vorgegebene Bereich beispielsweise ein Bereich sein, in dem zwischen 50 % und 90% aller Messwerte liegen, bzw. die vorgegebene Abweichung beispielsweise 10% oder weniger des Erwartungswerts betragen. Alternativ kann auch ein Median über alle oder ausgewählte Vergleichsmesswerte gebildet werden.

Durch die statistische Auswertung, insbesondere die Bildung von Mittelwerten aus den Messwerten der Messreihe des Sensors des Ego-Fahrzeugs und von Mittelwerten aus den Vergleichsmesswerten der Messreihe des Vergleichssensors, wird ein vereinfachter Vergleich ermöglicht. Alternativ können die Messreihe des Sensors des Ego-Fahrzeugs und die Vergleichsmessreihe jedes Vergleichssensors auch direkt miteinander oder auf andere Art und Weise vergleichen werden.

In manchen Ausführungsbeispielen können die Sensordaten des Sensors des Ego-Fahrzeugs mit statistisch ausgewerteten, beispielsweise gemittelten Vergleichsdaten mehrerer Vergleichssensoren verglichen werden.

Beispielsweise können die Sensordaten einen Messwert des Sensors des Ego-Fahrzeugs und die Vergleichsdaten jeweils einen Vergleichsmesswert pro Vergleichssensor umfassen. Dann kann der Messwert mit einem Mittelwert über die Vergleichsmesswerte aller oder ausgewählter Vergleichssensoren verglichen werden. Alternativ können die Sensordaten eine Messreihe oder einen Messverlauf mit einer Mehrzahl an Messwerten und die Vergleichsdaten jeweils eine Vergleichsmessreihe oder einen Vergleichsmessverlauf mit einer Mehrzahl an Vergleichsmesswerten pro Vergleichssensor umfassen. Dann kann die Messreihe mit einer gemittelten Vergleichsmessreihe der verschiedenen Vergleichssensoren verglichen werden. Beim Mitteln der Vergleichsmessreihen können Vergleichsmessreihen und/oder einzelne Vergleichsmesswerte unberücksichtigt bleiben, beispielsweise wenn sie sich deutlich von der Mehrheit der Vergleichsmessreihen bzw. Vergleichsmessdaten unterscheiden. Alternativ kann, beispielsweise wie oben beschrieben, ein Mittelwert über die Messwerte der Messreihe gebildet werden und ein Mittelwert über alle oder ausgewählte Mittelwerte über die Vergleichsmesswerte der Vergleichsmessreihen der Vergleichssensoren, die beispielsweise wie oben beschrieben gebildet wurden, gebildet werden. Die ausgewählten Mittelwerte über die Vergleichsmesswerte können in einem vorgegebenen Bereich, in dem beispielsweise zwischen 50 % und 90% aller Mittelwerte liegen, liegen oder eine Abweichung von einem Erwartungswert aufweisen, die geringer als eine vorgegebene Abweichung ist, beispielsweise 10% oder weniger des Erwartungswerts beträgt. Der Mittelwert über die Messwerte kann dann mit dem Mittelwert über die Mittelwerte der Vergleichsmessreihen verglichen werden.

Durch die Bildung von Mittelwerten wird ein vereinfachter Vergleich ermöglicht. Alternativ können die Sensordaten des Sensors des Ego-Fahrzeugs und die Vergleichsdaten jedes Vergleichssensors auch direkt miteinander oder auf andere Art und Weise vergleichen werden.

In manchen Ausführungsbeispielen können die Vergleichsdaten der mehreren Vergleichssensoren eine Abweichung von Erwartungsdaten aufweisen, die geringer als eine vorgegebene Abweichung ist. Die Abweichung kann beispielsweise 10% oder weniger der Erwartungsdaten betragen. So können aus den mehreren Vergleichssensoren die Sensoren herausgefiltert werden und unberücksichtigt bleiben, deren Vergleichsdaten stark von der Mehrheit der Vergleichssensoren abweichen und als fehlerbehaftet einzuschätzen sind.

Den Sensordaten kann eine Positionsangabe des Sensors bzw. des Ego-Fahrzeugs zugeordnet sein, beispielsweise eine GPS-Position. Vorzugsweise kann den Sensordaten neben der Positionsangabe eine Zeitangabe zugeordnet sein. Entsprechend kann den Vergleichsdaten jedes Vergleichssensors eine Positionsangabe des jeweiligen Vergleichssensors zugeordnet sein, beispielsweise eine GPS-Position. Zudem kann den Vergleichsdaten jedes Vergleichssensors neben der Positionsangabe eine Zeitangabe zugeordnet sein. So kann einfach ausgewählt werden, welche Vergleichsdaten erfasst sind, während sich der Vergleichssensor bzw. das Fremdfahrzeug in dem vorgegebenen Bereich um die Verweilposition des Egofahrzeugs befindet, und damit für die Überwachung der Sensorfunktion des Sensors des Ego-Fahrzeugs relevant sind. Den Sensordaten und/oder den Vergleichsdaten können noch andere Informationen zugeordnet sein, beispielsweise Informationen über einen Betriebszustand des Ego-Fahrzeugs bzw. des Fremdfahrzeugs und/oder über eine Position des Sensors im Ego-Fahrzeug bzw. eine Position des Vergleichssensors.

In manchen Ausführungsbeispielen kann der Sensor, wie oben bereits erwähnt, ein Emissionssensor oder ein umgebungserfassender Sensor sein. Zum Beispiel kann der Sensor ein Sickoxidsensor (NOx-Sensor), ein Partikelsensor, eine Lambdasonde, ein Drucksensor, beispielsweise ein Ladedrucksensor, ein Feinstaubsensor, ein Gassensor, beispielsweise Kohlenwasserstoffsensor oder ein Kohlenstoffmonoxidsensor, oder ein anderer Emissionssensor sein. Alternativ kann der Sensor ein Temperatursensor, ein Luftfeuchtesensor, ein Helligkeitssensor, eine Kamera oder ein anderer umgebungserfassender Sensor sein.

Der Sensor ist vorzugsweise so im Ego-Fahrzeug angeordnet, dass er mit der Umgebung koppelbar ist. Wenn der Sensor ein Emissionssensor ist, kann er vorzugsweise in einem Abgastrakt einer Verbrennungskraftmaschine angeordnet sein, wobei eine Abgasklappe während des Erfassens der Sensordaten geöffnet ist.

Der Vergleichssensor kann ein Sensor derselben Art wie der Sensor in dem Ego-Fahrzeug sein, d.h. ein Sensor, der der Messung derselben Eigenschaft dient, die auch durch den Sensor des Vergleichsfahrzeugs dient. Vorzugsweise kann der Vergleichssensor ein Sensor desselben Typs wie der Sensor in dem Ego-Fahrzeug sein, d.h. beispielsweise ein Sensor derselben Baureihe des Sensors des Ego-Fahrzeugs. Dadurch kann ein Vergleichsergebnis der Sensordaten mit den Vergleichsdaten verbessert werden. Der Vergleichssensor kann vorzugsweise in analoger Weise wie der Sensor des Ego-Fahrzeugs mit der Umgebung koppelbar sein.

In manchen Ausführungsbeispielen kann das Beurteilen des Vergleichsergebnisses das Bestimmen eines Abstands (Offsets) zwischen den Sensordaten und den Vergleichsdaten, beispielsweise zwischen einem Messwert des Sensors des Ego-Fahrzeugs und einem Mittelwert über Vergleichsmesswerte mehrerer oder ausgewählter Vergleichssensoren oder zwischen einem Mittelwert über Messwerte des Sensors des Ego-Fahrzeugs und einem Mittelwert über gemittelte Vergleichsmessreihen der Vergleichssensoren, umfassen. Ist der Abstand kleiner als ein erster vorgegebener Abstand, ist die Sensorfunktion gut. Liegt der Abstand zwischen dem ersten vorgegebenen Abstand und einem zweiten vorgegebenen Abstand, ist die Sensorfunktion kritisch. Ist der Abstand größer als der zweite vorgegebene Abstand, ist der Sensor kaputt.

Entsprechend kann das Verfahren weiterhin das Erzeugen einer Sensorfunktionsinformation, die die Sensorfunktion widergibt, umfassen.

In manchen Ausführungsbeispielen kann das Verfahren weiterhin das Kalibrieren des Sensors in Abhängigkeit von dem Vergleichsergebnis und/oder das Erzeugen eines Steuersignals für einen Antriebsstrang des Ego-Fahrzeugs in Abhängigkeit des Vergleichsergebnisses und/oder das Anzeigen einer Wartungsaufforderung und/oder einer Fehlerinformation umfassen. Wenn der Zustand des Sensors als gut beurteilt wurde, kann die Überwachung beendet werden oder neu gestartet werden. Wenn der Zustand des Sensors als kritisch beurteilt wurde, kann der Sensor beispielsweise kalibriert werden und/oder eine Wartungsaufforderung angezeigt werden. Wenn der Zustand des Sensors als kaputt beurteilt wurde, kann ein Steuersignal für einen Antriebsstrang des Ego-Fahrzeugs in Abhängigkeit des Vergleichsergebnisses erzeugt werden und die Antriebsmaschine, beispielsweise die Verbrennungskraftmaschine des Ego-Fahrzeugs, anhand der Vergleichsdaten der Vergleichssensoren gesteuert werden und/oder eine Fehlerinformation angezeigt werden.

Somit können mit dem erfindungsgemäßen Verfahren Sensoren anderer Fahrzeuge für die Sensorkalibrierung von Sensoren im Ego-Fahrzeug, für eine Antriebsstrangdiagnose im Ego-Fahrzeug und/oder für eine Antriebsstrangregelung im Ego-Fahrzeug genutzt werden.

Die Erfindung betrifft weiterhin ein Steuergerät zum Überwachen einer Sensorfunktion eines Sensors in einem Ego-Fahrzeug. Das Steuergerät ist dazu ausgebildet, ein Verfahren zum Überwachen einer Sensorfunktion eines Sensors in einem Ego-Fahrzeug, wie es voranstehend beschrieben ist, auszuführen. Das Verfahren umfasst das Vergleichen von Sensordaten des Sensors mit Vergleichsdaten eines außerhalb des Ego-Fahrzeugs befindlichen Vergleichssensors, wobei die Sensordaten in einer aktuellen Position des Ego-Fahrzeugs erfasst werden und die Vergleichsdaten erfasst sind, während sich der Vergleichssensor in einem vorgegebenen Bereich um die aktuelle Position befindet, und das Beurteilen der Sensorfunktion in Abhängigkeit eines Vergleichsergebnisses der Sensordaten mit den Vergleichsdaten.

Das Steuergerät umfasst insbesondere einen Prozessor zum Vergleichen der Sensordaten mit den Vergleichsdaten und zum Beurteilen der Sensorfunktion des Sensors und gegebenenfalls zum Erzeugen eines Kalibriersignals zum Kalibrieren des Sensors, eines Steuersignals zum Steuern der Antriebsmaschine, beispielsweise der Verbrennungskraftmaschine, des Ego-fahrzeugs und/oder zum Erzeugen einer Wartungs- und/oder Fehlerinformation.

Weiterhin kann das Steuergerät einen Empfänger zum Empfangen von Sensordaten und/oder Vergleichsdaten, eine Speichereinheit zum Speichern von Vergleichsdaten und/oder einen Sender zum Senden des Kalibriersignals, des Steuersignals und/oder der Wartungs- und/oder Fehlerinformation umfassen.

In manchen Ausführungsbeispielen kann das Steuergerät eine Steuereinrichtung des Ego-Fahrzeugs sein, beispielsweise eine Motorsteuerung des Ego-Fahrzeugs. Die Motorsteuerung des Ego-Fahrzeugs kann dazu ausgebildet sein, die Vergleichsdaten der Vergleichssensoren, beispielsweise der Fremdfahrzeuge, auszuwerten und einen Referenzwert zu berechnen, der dann für die Eigendiagnose und/ oder Sensorkalibrierung verwendet wird.

Alternativ kann das Steuergerät eine Steuereinrichtung einer Backendeinrichtung, beispielsweise eines Servers, sein, die eine Kommunikationseinrichtung für einen Datenaustausch mit dem Ego-Fahrzeug umfasst, beispielsweise über eine LTE-Verbindung oder eine Internetverbindung. Die Backendeinrichtung kann dazu ausgebildet sein, die Sensordaten und die Vergleichsdaten der Vergleichssensoren auszuwerten und einen Referenzwert an das Ego-Fahrzeug zu schicken, dass das Ego-Fahrzeug selbst eine Kalibrierung und/oder Eigendiagnose ausführt. Alternativ kann die Backendeinrichtung dazu ausgebildet sein, die Sensordaten und die Vergleichsdaten der Vergleichssensoren auszuwerten, die Funktionalität des Sensors zu beurteilen und das Ergebnis an das Ego-Fahrzeug zu senden, zum Beispiel, dass der Sensor in Ordnung oder nicht in Ordnung ist, und/oder, dass ein Antriebsstrang in Ordnung oder nicht in Ordnung ist. Weiter alternativ kann die Backendeinrichtung dazu ausgebildet sein, die Sensordaten und die Vergleichsdaten der Vergleichssensoren auszuwerten, ein Kalibriersignal, ein Steuersignal und/oder eine Wartungs- und/oder Fehlerinformation zu erzeugen und diese an das Ego-Fahrzeug zu übermitteln.

Die Erfindung betrifft weiterhin ein Kraftfahrzeug mit einem Sensor, einer Kommunikationseinrichtung zum Empfangen von Vergleichsdaten eines oder mehrerer Vergleichssensoren, die sich beispielsweise in Fremdfahrzeugen befinden, von den Vergleichssensoren oder einer Backendeinrichtung und einem Steuergerät zum Ausführen des oben beschrieben Verfahrens zum Überwachen des Sensors.

Das Steuergerät kann beispielsweise mit dem Sensor so verbunden sein, dass infolge eines Kalibriesignals eine Kalibrierung des Sensors eingeleitet werden kann. Alternativ oder zusätzlich kann das Steuergerät so mit einem Antriebstrang des Kraftfahrzeugs verbunden sein, dass der Antriebsstrang in Abhängigkeit der Vergleichsdaten gesteuert werden kann.

Das Fahrzeug kann weiterhin eine Anzeigevorrichtung, beispielsweise ein Display, zum Anzeigen einer Wartungs- und/oder Fehlerinformation aufweisen.

Die Erfindung betrifft weiterhin eine Backendeinrichtung mit einer Kommunikationseinrichtung zum Empfangen von Sensordaten eines Sensors eines Ego-Fahrzeugs von dem Sensor und von Vergleichsdaten eines oder mehrerer Vergleichssensoren, die sich beispielsweise in Fremdfahrzeugen befinden, von den Vergleichssensoren und mit einem Steuergerät zum Ausführen des oben beschrieben Verfahrens zum Überwachen des Sensors des Ego-Fahrzeugs.

Die Kommunikationseinrichtung der Backendeinrichtung kann weiterhin zum Versenden von Vergleichsdaten und/oder eines Referenzwertes und/oder anderer Signale, wie sie oben erwähnt sind, ausgebildet sein.

Weiterhin kann die Backendeinrichtung eine Speichereinheit zum Speichern der Vergleichsdaten und gegebenenfalls von den Vergleichsdaten zugeordneten Positionsangaben und/oder Zeitangaben aufweisen.

Die vorliegende Erfindung betrifft weiterhin ein Überwachungssystem zum Überwachen eines Sensors eines Ego-Fahrzeugs. Das Überwachungssystem umfasst eine Backendeinrichtung, wie sie oben beschrien ist, und ein Ego-Fahrzeug mit dem Sensor, wobei das Ego-Fahrzeug dazu ausgebildet ist, mittels von der Backendeinrichtung übertragener Signale eine Sensorkalibrierung durchzuführen und/oder einen Antriebsstrang des Ego-Fahrzeugs zu überprüfen und/oder zu steuern.

Zusammenfassend ist die Idee der vorliegenden Erfindung die Nutzung von Big-Data-Informationen als Referenzsignal für die Sensorkalibrierung sowie die Eigendiagnose.

Die Sensorinformationen aus Fahrzeugen (Fremdfahrzeugen) in der näheren Umgebung des Ego-Fahrzeugs, die ähnliche Sensoren wie das Ego-Fahrzeug besitzen, können gesammelt und bspw. gemittelt werden, um dann einen Referenzwert für das Ego-Fahrzeug auszurechnen. Dabei können starke Abweichungen Diagnosefunktionalitäten verbessern. Gegebenenfalls können die Sensorwerte der sich in der Nähe befindlichen Fahrzeuge auch direkt als Eingang für Antriebsfunktionen des Ego-Fahrzeugs genutzt werden (z.B. Umgebungsdruck und Temperatur im Luft-Abgassystem). Emissionssensorik kann ebenfalls nachkalibriert werden (z.B. NOx, Partikel, Lambda). Die Kalibrierung an sich kann durch Offset-Bestimmung bei Umgebungsbedingungen gegenüber dem Referenzwert erfolgen (Sensordrift). Die DiagnoseFunktionalitäten könnten gegebenenfalls an ein Backend ausgelagert werden. In diesem Falle schickt das Backend dann eine Statusbotschaft an das Fahrzeug, beispielsweise ob der Sensor in Ordnung oder nicht in Ordnung ist und/oder ob ein Antriebsstrang in Ordnung oder nicht in Ordnung ist.

Ausführungsbeispiele der Erfindung werden nun beispielhaft und unter Bezugnahme auf die beigefügten Zeichnungen beschrieben. Es zeigen:
Fig. 1 eine schematische Darstellung einer Parksituation eines Ego-Fahrzeug gemäß einem ersten Ausführungsbeispiel;
Fig. 2 eine schematische Darstellung einzelner Komponenten des Ego-Fahrzeugs einschließlich eines Steuergeräts zum Überwachen einer Sensorfunktion eines Sensors des Ego-Fahrzeugs;
Fig. 3 ein Flussdiagramm eines Verfahrens zum Überwachen der Sensorfunktion des Sensors des Ego-Fahrzeugs;
Fig. 4 ein beispielhafter NOx-Verlauf des Sensors und beispielhafte NOx-Vergleichsverläufe von Vergleichssensoren;
Fig. 5 ein Flussdiagramm des Vergleichens des NOx-Verlaufs des Sensors mit den NOx-Vergleichsverläufen der Vergleichssensoren;
Fig. 6 ein Diagramm der Mittelwerte des NOx-Verlaufs und der NOx-Vergleichsverläufe aus Figur 4;
Fig. 7 eine schematische Darstellung einer Parksituation eines Ego-Fahrzeug gemäß einem zweiten Ausführungsbeispiel;
Fig. 8 eine schematische Darstellung einer Backendeinrichtung einschließlich eines Steuergeräts zum Überwachen einer Sensorfunktion eines Sensors des Ego-Fahrzeugs gemäß dem zweiten Ausführungsbeispiel;
Fig. 9 eine schematische Darstellung einzelner Komponenten des Ego-Fahrzeugs gemäß dem zweiten Ausführungsbeispiel; und
Fig. 10 ein Flussdiagramm eines Verfahrens zum Überwachen der Sensorfunktion des Sensors des Ego-Fahrzeugs.

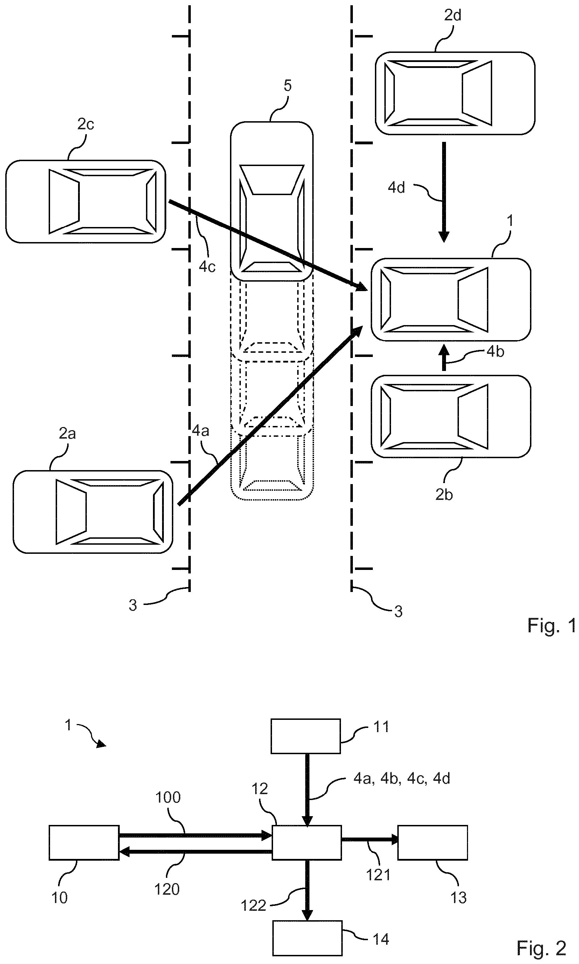

Ein erstes Ausführungsbeispiel der vorliegenden Erfindung wird anhand der Figuren 1 bis 6 beschrieben.

Figur 1 zeigt ein Ego-Fahrzeug 1 mit einem NOx-Sensor und einem Steuergerät zum Überwachen einer Sensorfunktion des NOx-Sensors. Das Ego-Fahrzeug 1 befindet sich im Stillstand bei abgeschalteter Verbrennungskraftmaschine mit mehreren parkenden Fremdfahrzeugen 2a, 2b, 2c, 2d auf einem Parkplatz, der durch die Parklückenmarkierung 3 angedeutet ist. Jedes der Fremdfahrzeuge 2a, 2b, 2c, 2d umfasst einen Vergleichssensor, der als NOx-Sensor ausgebildet ist. Weiterhin ist jedes der Fremdfahrzeuge 2a, 2b, 2c, 2d dazu ausgebildet, jeweils einen von dem Vergleichssensor erfassten NOx-Vergleichsverlauf 4a, 4b, 4c, 4d an das Ego-Fahrzeug 1 zu senden. Weiterhin zeigt Fig. 1 ein fahrendes Fremdfahrzeug 5, das zwischen den parkenden Fahrzeugen 1, 4a, 4b, 4c, 4d vorbeifährt. Ein Sensorsignal des fahrenden Fremdfahrzeugs 5 kann zwar versendet werden, wird aber bei der Überwachung des NOx-Sensors des Ego-Fahrzeugs nicht berücksichtigt.

Das Ego-Fahrzeug 1 umfasst, wie in Figur 2 schematisch dargestellt, den NOx-Sensor 10 zum Erfassen eines NOx-Verlaufs 100, einen Empfänger 11 zum Empfangen der NOx-Vergleichsverläufe 4a, 4b, 4c, 4d, die zeitgleich mit dem NOx-Verlauf 100 von je einem der Vergleichssensoren erfasst werden, und ein Steuergerät 12 zum Vergleichen des NOx-Verlaufs 100 mit den NOx-Vergleichsverläufen 4a, 4b, 4c, 4d. Das Steuergerät 12 ist so mit dem NOx-Sensor 10 verbunden, dass es den NOx-Verlauf 100 empfangt und gegebenenfalls ein Kalibriersignal 120 an den Sensor 10 übertragen kann, um eine Kalibrierung des NOx-Sensors 10 zu starten. Das Steuergerät 12 ist außerdem so mit dem Empfänger 11 verbunden, dass es die von den Vergleichssensoren erfassten NOx-Vergleichsverläufe 4a, 4b, 4c, 4d empfängt.

Wie in Figur 2 gezeigt, umfasst das Ego-Fahrzeug 1 weiterhin eine Anzeigeeinheit 13 zum Anzeigen einer Wartungs- und/oder Fehlerinformation 121, wobei das Steuergerät 12 so mit der Anzeigeeinheit 13 verbunden ist, dass die Wartungs- und/oder Fehlerinformation 121 an die Anzeigeeinheit 13 übertragen werden kann. Außerdem umfasst das Ego-Fahrzeug 1 weiterhin einen Antriebsstrang 14, wobei das Steuergerät 12 so mit dem Antriebsstrang 14 verbunden ist, dass Ersatzsensordaten 122, die auf den NOx-Vergleichsverläufen basieren, zum Steuern des Antriebsstrangs 14 übertragen werden können.

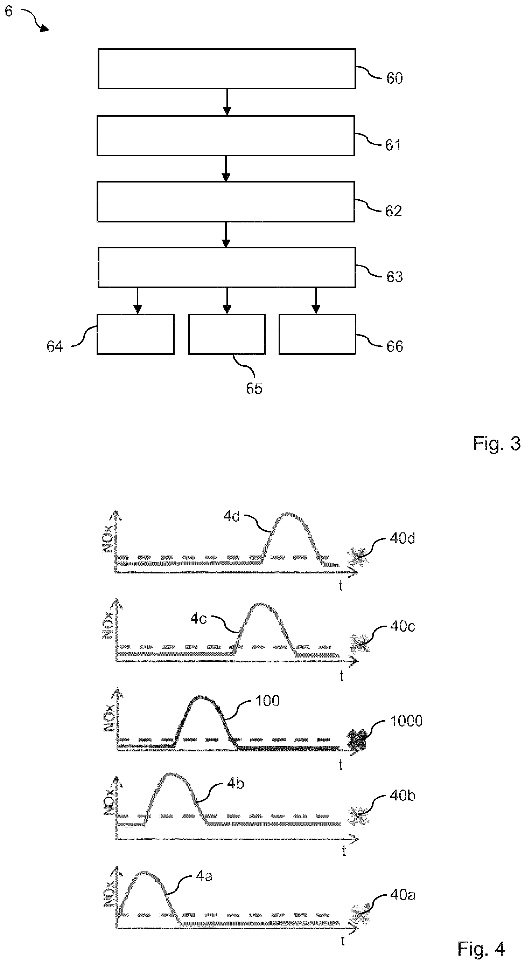

Nachfolgend wird anhand von Figur 3 ein erfindungsgemäßes Verfahren 6 zum Überwachen der Sensorfunktion des NOx-Sensors 10 des Ego-Fahrzeugs 1 beschrieben.

Bei 60 wird der NOx-Verlauf 100 des NOx-Sensors 10 des Ego-Fahrzeugs 1 gemessen und an das Steuergerät 12 übertragen. Ein beispielhafter NOx-Verlauf 100 ist in Figur 4 gezeigt. Der NOx-Verlauf 100 weist in weiten Teilen einen konstanten Verlauf auf und zeigt in einem Zeitintervall, in dem das fahrende Fremdfahrzeug 5 das Ego-Fahrzeug 1 passiert, einen NOx-Anstieg.

Gleichzeitig werden bei 61 die NOx-Vergleichsverläufe 4a, 4b, 4c, 4d von den parkenden Fremdfahrzeugen 2a, 2b, 2c, 2d von dem Empfänger 11 des Ego-Fahrzeugs 1 empfangen. Beispiele für von den Vergleichssensoren erfasste NOx-Vergleichsverläufe 4a, 4b, 4c, 4d sind ebenfalls in Figur 4 gezeigt. Jeder NOx-Vergleichsverlauf 4a, 4b, 4c, 4d weist in weiten Teilen einen konstanten Verlauf auf und zeigt in einem Zeitintervall, in dem das fahrende Fremdfahrzeug 5 das jeweilige parkende Fremdfahrzeug 2a, 2b, 2c, 2d passiert, einen NOx-Anstieg. Der NOx-Anstieg erscheint in den NOx-Vergleichsverläufen 4a, 4b der parkenden Fremdfahrzeuge 2a, 2b früher als in dem NOx-Verlauf 100 des Ego-Fahrzeugs 1, da das fahrende Fremdfahrzeug 5 die parkenden Fremdfahrzeuge 2a, 2b früher passiert als das Ego-Fahrzeug 1. Der NOx-Anstieg erscheint in den NOx-Vergleichsverläufen 4c, 4d der parkenden Fremdfahrzeuge 2c, 2d später als in dem NOx-Verlauf 100 des Ego-Fahrzeugs 1, da das fahrende Fremdfahrzeug 5 die parkenden Fremdfahrzeuge 2c, 2d später passiert als das Ego-Fahrzeug 1.

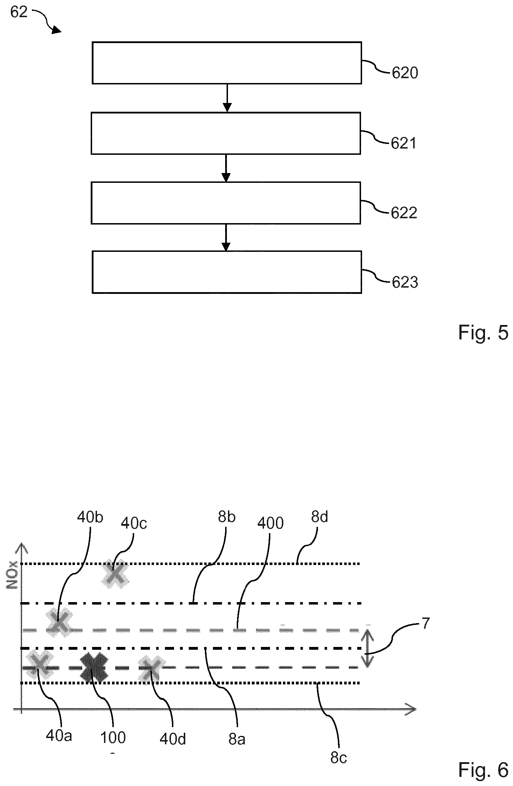

Bei 62 wird der NOx-Messverlauf 100 des NOx-Sensors 10 des Ego-Fahrzeugs 1 mit den NOx-Vergleichsverläufen 4a, 4b, 4c, 4d der parkenden Fremdfahrzeuge 2a, 2b, 2c, 2d verglichen. Das Vergleichen wird mit Bezug auf die Figuren 4 und 5 nachfolgend beschrieben.

Bei 620 wird ein Mittelwert 1000 des NOx-Verlaufs 100 gebildet, der in Figur 4 als Kreuz am Ende des Messintervalls des NOx-Verlaufs 100 und in Figur 6 gezeigt ist. Dabei werden im ersten Ausführungsbeispiel alle Messwerte des NOx-Verlaufs 100 berücksichtigt. In anderen Ausführungsbeispielen können beispielsweise nur die im Wesentlichen konstanten Messwerte des NOx-Verlaufs 100 berücksichtigt werden. Beispielsweise können Zeitfenster, in denen das fahrende Fremdfahrzeug 5 gerade vorbeifährt, bei der Mittelwertbildung nicht verwendet oder gesondert betrachtet werden.

Bei 621 wird ein Mittelwert 40a, 40b, 40c, 40d jedes NOx-Vergleichsverlaufs 4a, 4b, 4c, 4d gebildet. Die Mittelwertbildung erfolgt analog zur Mittelwertbildung des Mittelwerts 1000 des NOx-Verlaufs 100. Die Mittelwerte 40a, 40b, 40c, 40d sind in Figur 4 als Kreuz am Ende des Messintervalls des jeweiligen NOx-Vergleichsverlaufs 4a, 4b, 4c, 4d und in Figur 6 gezeigt.

Bei 622 werden die Mittelwerte 40a, 40b, 40c, 40d jedes NOx-Vergleichsverlaufs 4a, 4b, 4c, 4d gemittelt. Der Mittelwert 400 über die Mittelwerte 40a, 40b, 40c, 40d ist in Figur 6 als konstante Linie aufgetragen.

Bei 623 wird ein Abstand 7 zwischen dem Mittelwert 1000 des NOx-Verlaufs 100 und dem Mittelwert 400 über die Mittelwerte 40a, 40b, 40c, 40d ermittelt. Der Abstand 7 ist in Figur 6 als Doppelpfeil gezeigt und stellt ein Vergleichsergebnis des Vergleichs des NOx-Messverlauf 100 des NOx-Sensors 10 des Ego-Fahrzeugs 1 mit den NOx-Vergleichsverläufen 4a, 4b, 4c, 4d der parkenden Fremdfahrzeuge 2a, 2b, 2c, 2d dar.

In anderen Ausführungsbeispielen kann der NOx-Messverlauf 100 des NOx-Sensors 10 des Ego-Fahrzeugs 1 mit den NOx-Vergleichsverläufen 4a, 4b, 4c, 4d der parkenden Fremdfahrzeuge 2a, 2b, 2c, 2d auch auf andere Weise verglichen werden.

Bei 63 in Figur 3 wird die Sensorfunktion des NOx-Sensors 10 anhand des Vergleichsergebnisses aus 62, hier im ersten Ausführungsbeispiel anhand des Abstands 7 zwischen dem Mittelwert 1000 des NOx-Verlaufs 100 und dem Mittelwert 400 über die NOx-Vergleichsverläufe 4a, 4b, 4c, 4d, beurteilt.

Im ersten Ausführungsbeispiel sind Abstandsgrenzwerte hinterlegt, wobei ein erster unterer Abstandsgrenzwert 8a sowie ein erster oberer Abstandsgrenzwert 8b eine Grenze zwischen einem gut funktionierenden Sensor und einem mangelhaft kalibrierten Sensor definieren und ein zweiter unterer Abstandsgrenzwert 8c und ein zweiter oberer Abstandsgrenzwert 8d eine Grenze zwischen einem mangelhaft kalibrierten Sensor und einem kaputten, nicht mehr kalibrierbaren Sensor definieren.

Beim Beurteilen wird dann bestimmt, dass der NOx-Sensor 10 gut funktioniert, wenn der Abstand 7 kleiner oder gleich einem Abstand zwischen dem Mittelwert 400 und dem ersten unteren Abstandsgrenzwert 8a bzw. kleiner oder gleich einem Abstand zwischen dem Mittelwert 400 und dem ersten oberen Abstandsgrenzwert 8b ist, d.h. wenn der Mittelwert 1000 in einem Bereich zwischen dem ersten unteren Abstandsgrenzwert 8a und dem ersten oberen Abstandsgrenzwert 8b liegt. Wenn der Abstand 7 größer als ein Abstand zwischen dem Mittelwert 400 und dem ersten unteren Abstandsgrenzwert 8a bzw. größer als ein Abstand zwischen dem Mittelwert 400 und dem ersten oberen Abstandsgrenzwert 8b ist und kleiner als ein Abstand zwischen dem Mittelwert 400 und dem zweiten unteren Abstandsgrenzwert 8c bzw. kleiner als ein Abstand zwischen dem Mittelwert 400 und dem zweiten oberen Abstandsgrenzwert 8d ist, d.h. wenn der Mittelwert 1000 in einem Bereich zwischen dem ersten unteren Abstandsgrenzwert 8a und dem zweiten unteren Abstandsgrenzwert 8c liegt oder in einem Bereich zwischen dem ersten oberen Abstandsgrenzwert 8b und dem zweiten oberen Abstandsgrenzwert 8d liegt, wie in Figur 4 dargestellt, wird bestimmt, dass der NOx-Sensor 10 mangelhaft kalibriert ist. Wenn der Abstand 7 gleich oder größer als ein Abstand zwischen dem Mittelwert 400 und dem zweiten unteren Abstandsgrenzwert 8c bzw. gleich oder größer als ein Abstand zwischen dem Mittelwert 400 und dem zweiten unteren Abstandsgrenzwert 8d ist, d.h. wenn der Mittelwert 1000 in einem Bereich unterhalb des zweiten unteren Abstandsgrenzwerts 8c oder oberhalb des zweiten oberen Abstandsgrenzwerts 8d liegt, wird bestimmt, dass der NOx-Sensor 10 kaputt und nicht mehr kalibrierbar ist.

In manchen anderen Ausführungsbeispielen kann die Beurteilung auf eine modifizierte oder andere Weise erfolgen. Beispielsweise kann eine detailliertere Beurteilung erfolgen.

Wenn bei 63 beurteilt wurde, dass der NOx-Sensor 10 gut funktioniert, wird die Überwachung bei 64 beendet.

Wenn bei 63 beurteilt wurde, dass der NOx-Sensor 10 mangelhaft kalibriert ist, wird bei 65 ein Kalibriersignal 120 erzeugt und an den NOx-Sensor 10 übertragen, um einen Kalibriervorgang des NOx-Sensors 10 zu starten. Außerdem wird bei 65 eine Wartungsinformation 121, dass der NOx-Sensor 10 gewartet werden soll, erzeugt und an die Anzeigeeinheit 13 übertragen, um von der Anzeigeeinheit 13 angezeigt zu werden.

Wenn bei 63 beurteilt wurde, dass der NOx-Sensor 10 kaputt ist und nicht mehr kalibriert werden kann, werden bei 66 aus den NOx-Vergleichsverläufen 40a, 40b, 40c, 40d Ersatzsensordaten 122 erzeugt und an den Antriebsstrang 14 übertragen, um den Antriebsstrang 14 unter Nutzung der Ersatzsensordaten 122 anstelle des von dem NOx-Sensor 10 erfassten NOx-Verlaufs 100 zu steuern. Außerdem wird bei 66 eine Fehlerinformation, dass der NOx-Sensor 10 ausgetauscht werden muss, erzeugt und an die Anzeigeeinheit 13 übertragen, um von der Anzeigeeinheit 13 angezeigt zu werden.

In manchen anderen Ausführungsbeispielen kann auf die Erzeugung einzelner Signale verzichtet werden oder es können zusätzlichen Signale erzeugt werden.

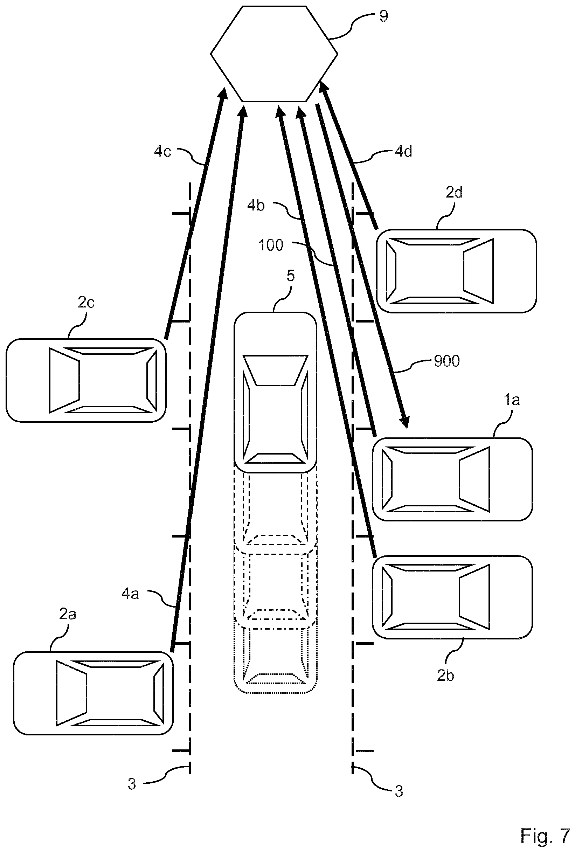

Ein zweites Ausführungsbeispiel der vorliegenden Erfindung wird anhand der Figuren 7 bis 10 beschrieben.

Figur 7 zeigt ein Ego-Fahrzeug 1a mit einem NOx-Sensor in einer ähnlichen Parksituation wie das Ego-Fahrzeug 1 in Figur 1. Das Ego-Fahrzeug 1a sowie die parkenden Fremdfahrzeuge 2a, 2b, 2c, 2d befinden sich im Stillstand bei abgeschalteter Verbrennungskraftmaschine zwischen Parklückenmarkierungen 3 auf einem Parkplatz und ein fahrendes Fremdfahrzeug 5 fährt zwischen den parkenden Fahrzeugen 1a, 4a, 4b, 4c, 4d vorbei. Jedes der Fremdfahrzeuge 2a, 2b, 2c, 2d umfasst einen Vergleichssensor, der als NOx-Sensor ausgebildet ist. Das Ego-Fahrzeug 1a ist dazu ausgebildet, einen von dem NOx-Sensor erfassten NOx-Verlauf an eine Backendeinrichtung 9 zu übertragen. Entsprechend ist jedes der Fremdfahrzeuge 2a, 2b, 2c, 2d dazu ausgebildet, jeweils einen von dem Vergleichssensor erfassten NOx-Vergleichsverlauf 4a, 4b, 4c, 4d an die Backendeinrichtung 9 zu senden. Die Backendeinrichtung 9 ist dazu ausgebildet, eine Sensorfunktion des NOx-Sensors zu überwachen und die Sensorfunktion zu beurteilen.

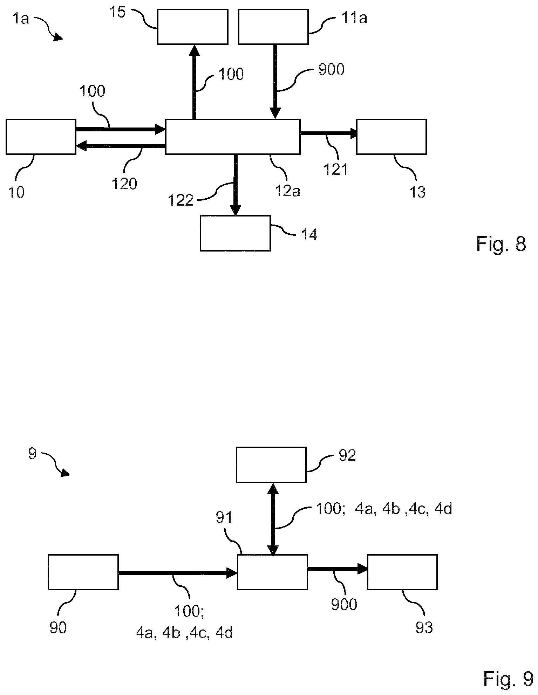

Das Ego-Fahrzeug 1a umfasst, wie in Figur 8 schematisch dargestellt, den NOx-Sensor 10 zum Erfassen eines NOx-Verlaufs 100, einen Sender 15 zum Übertragen eines von dem NOx-Sensor 10 erfassten NOx-Verlaufs an die Backendeinrichtung 9, einen Empfänger 11a zum Empfangen eines Überwachungsergebnisses 900, das von der Backendeinrichtung 9 erzeugt und übertragen wird, und einen Prozessor 12a zum Verarbeiten und Verteilen des von der Backendeinrichtung 9 übermittelten Überwachungsergebnisses. In anderen Ausführungsbeispielen können anstelle des Überwachungsergebnisses andere Signale empfangen und verarbeitet werden.

Der Prozessor 12a ist mit dem NOx-Sensor 10, dem Sender 15 und dem Empfänger 11a verbunden, um das von der Backendeinrichtung 9 übermittelte Überwachungsergebnis zu verteilen, insbesondere ein Kalibriersignal 120 an den Sensor 10 zu übertragen kann, um eine Kalibrierung des NOx-Sensors 10 zu starten.

Wie in Figur 8 gezeigt, umfasst das Ego-Fahrzeug 1a weiterhin eine Anzeigeeinheit 13 zum Anzeigen einer Wartungs- und/oder Fehlerinformation 121, wobei der Prozessor 12a so mit der Anzeigeeinheit 13 verbunden ist, dass die Wartungs- und/oder Fehlerinformation 121 an die Anzeigeeinheit 13 übertragen werden kann. Außerdem umfasst das Ego-Fahrzeug 1 weiterhin einen Antriebsstrang 14, wobei der Prozessor 12a so mit dem Antriebsstrang 14 verbunden ist, dass Ersatzsensordaten 122, die auf den NOx-Vergleichsverläufen basieren, zum Steuern des Antriebsstrangs 14 übertragen werden können.

Die Backendeinrichtung 9 umfasst, wie in Figur 9 schematisch dargestellt, einen Empfänger 90 zum Empfangen des NOx-Verlaufs 100 und der NOx-Vergleichsverläufe 4a, 4b, 4c, 4d, die zeitgleich mit dem NOx-Verlauf 100 von je einem der Vergleichssensoren erfasst werden, ein Steuergerät 91 zum Vergleichen des NOx-Verlaufs 100 mit den NOx-Vergleichsverläufen 4a, 4b, 4c, 4d, einen Datenspeicher 92 zum Zwischenspeichern von NOx-Vergleichsverläufen und einen Sender 93 zum Übertragen des Überwachungsergebnisses 900 an den Empfänger 11a des Ego-Fahrzeugs 1a. Das Steuergerät 91 ist mit dem Empfänger 90, dem Datenspeicher 92 und dem Sender 93 zur Übertragung von Signalen verbunden. In anderen Ausführungsbeispielen können die NOx-Vergleichsverläufe 4a, 4b, 4c, 4d auch vor dem NOx-Verlauf 100 von je einem der Vergleichssensoren erfasst worden sein, wobei die Fremdfahrzeuge mit den Vergleichssensoren während der Messung der NOx-Vergleichsverläufe 4a, 4b, 4c, 4d auf dem Parkplatz standen.

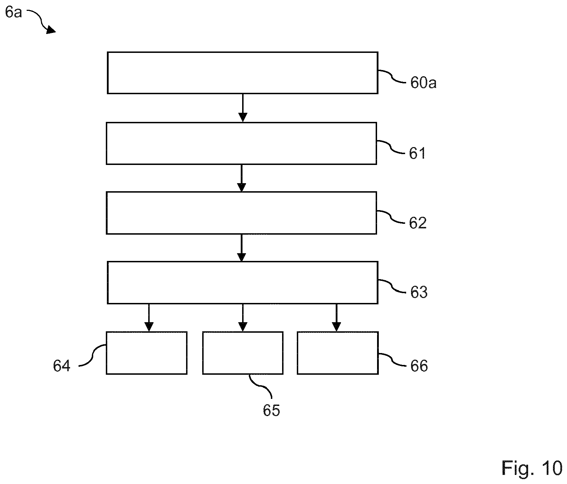

Nachfolgend wird anhand von Figur 10 ein erfindungsgemäßes Verfahren 6a zum Überwachen der Sensorfunktion des NOx-Sensors 10 des Ego-Fahrzeugs 1 beschrieben.

Bei 60a wird der von dem NOx-Sensor 10 des Ego-Fahrzeugs 1a gemessene NOx-Verlauf 100 von dem Empfänger 90 der Backendeinrichtung 9 empfangen und an das Steuergerät 91 der Backendeinrichtung 9 übertragen. Der NOx-Verlauf 100 ist wiederum der in Figur 4 gezeigte NOx-Verlauf 100.

Gleichzeitig werden bei 61 die NOx-Vergleichsverläufe 4a, 4b, 4c, 4d von den parkenden Fremdfahrzeugen 2a, 2b, 2c, 2d von dem Empfänger 90 der Backendeinrichtung 9 empfangen. Die NOx-Vergleichsverläufe 4a, 4b, 4c, 4d sind wiederum die in Figur 4 gezeigten NOx-Vergleichsverläufe 4a, 4b, 4c, 4d.

Bei 62 wird der NOx-Messverlauf 100 des NOx-Sensors 10 des Ego-Fahrzeugs 1 mit den NOx-Vergleichsverläufen 4a, 4b, 4c, 4d der parkenden Fremdfahrzeuge 2a, 2b, 2c, 2d verglichen. Das Vergleichen erfolgt wiederum wie mit Bezug auf die Figuren 4 und 5 hinsichtlich des ersten Ausführungsbeispiels beschrieben.

Bei 63 wird die Sensorfunktion des NOx-Sensors 10 anhand des Vergleichsergebnisses aus 62, wie hinsichtlich des ersten Ausführungsbeispiels oben ausgeführt, beurteilt.

Abhängig von dem Beurteilungsergebnis aus 63 wird, wie hinsichtlich des ersten Ausführungsbeispiels oben ausgeführt, bei 64 die Überwachung beendet, bei 65 ein Kalibriersignal 120 erzeugt und an den NOx-Sensor 10 übertragen und eine Wartungsinformation 121, dass der NOx-Sensor 10 gewartet werden soll, erzeugt und an die Anzeigeeinheit 13 übertragen oder bei 66 aus den NOx-Vergleichsverläufen 40a, 40b, 40c, 40d Ersatzsensordaten 122 erzeugt und an den Antriebsstrang 14 übertragen und eine Fehlerinformation, dass der NOx-Sensor 10 ausgetauscht werden muss, erzeugt und an die Anzeigeeinheit 13 übertragen.

Die Schritte 64 bis 66 werden von dem Prozessor 12a des Ego-Fahrzeugs 1a ausgeführt, wobei das Beurteilungsergebnis aus 63 als Überwachungsergebnis 900 von der Backendeinrichtung 9 an das Ego-Fahrzeug 1a übertragen wird. In anderen Ausführungsbeispielen können die Schritte 64 bis 66 von dem Steuergerät 91 der Backeneinrichtung 9 ausgeführt werden, wobei die erzeugten Signale jeweils über den Empfänger 11a und den Prozessor 12a des Ego-Fahrzeugs 1a an den Sensor 10, die Anzeigeeinheit 13 bzw. den Antriebsstrang 14 übertragen werden.

In anderen Ausführungsbeispielen kann die Sensorfunktion eines anderen Sensors, beispielsweise eines Temperatursensors, in analoger oder modifizierter Weise wie der NOx-Sensor im ersten Ausführungsbeispiel oder im zweiten Ausführungsbeispiel überwacht werden.

### Bezugszeichenliste

- 1, 1a: Ego-Fahrzeug
- 10: NOx-Sensor im Ego-Fahrzeug
- 100: NOx-Verlauf
- 1000: Mittelwert des NOx-Verlaufs 100
- 11, 11a: Empfänger
- 12: Steuergerät
- 12a: Prozessor
- 120: Kalibriersignal
- 121: Wartungs- und/oder Fehlerinformation
- 122: Ersatzsensordaten
- 13: Anzeigeeinheit
- 14: Antriebsstrang
- 15: Sender
- 2a, 2b, 2c, 2d: parkende Fremdfahrzeuge
- 3: Parklückenmarkierung
- 4a, 4b, 4c, 4d: NOx-Vergleichsverlauf
- 40a, 40b, 40c, 40d: Mittelwert über einen NOx-Vergleichsverlauf 4a, 4b, 4c, 4d
- 400: Mittelwert über die Mittelwerte 40a, 40b, 40c, 40d
- 5: fahrendes Fremdfahrzeug
- 6, 6a: Verfahren zum Überwachen einer Sensorfunktion des NOx-Sensors
- 60: Messen eines NOx-Verlaufs mittels des NOx-Sensors
- 60a: Empfangen eines von dem NOx-Sensor erfassten NOx-Verlaufs
- 61: Empfangen von NOx-Vergleichsverläufen
- 62: Vergleichen des NOx-Verlaufs mit den NOx-Vergleichsverläufen
- 620: Bilden eines Mittelwerts des NOx-Verlaufs
- 621: Bilden eines Mittelwerts jedes NOx-Vergleichsverlaufs
- 622: Bilden eines Mittelwerts über den Mittelwert jedes NOx-Vergleichsverlaufs
- 623: Bestimmen eines Abstandes zwischen dem Mittelwert des NOx-Verlaufs und dem Mittelwert über den Mittelwert jedes NOx-Vergleichsverlaufs
- 7: Abstand zwischen dem Mittelwert 1000 und dem Mittelwert 400
- 8a, 8b, 8c, 8d: Abstandsgrenzwert
- 9: Backendeinrichtung
- 90: Empfänger
- 900: Überwachungsergebnis
- 91: Steuergerät
- 92: Datenspeicher
- 93: Sender

## Patentansprüche

1. Verfahren zum Überwachen einer Sensorfunktion eines Sensors (10) in einem Ego-Fahrzeug (1, 1a), umfassend:
Vergleichen (62) von Sensordaten (100) des Sensors (10) mit Vergleichsdaten (4a, 4b, 4c, 4d) mehrerer außerhalb des Ego-Fahrzeugs (1, 1a) befindlicher Vergleichssensoren, wobei die Sensordaten (100) erfasst werden, nachdem das Ego-Fahrzeug (1, 1a) für eine vorgegebene Zeitspanne an der aktuellen Position des Ego-Fahrzeugs (1, 1a) abgestellt ist, und die Vergleichsdaten (4a, 4b, 4c, 4d) erfasst sind, während sich die Vergleichssensoren in einem vorgegebenen Bereich um die aktuelle Position befinden; und
Beurteilen (63) der Sensorfunktion in Abhängigkeit eines Vergleichsergebnisses der Sensordaten mit den Vergleichsdaten.

2. Verfahren nach Anspruch 1, wobei die Sensordaten (100) parallel oder zeitversetzt zu den Vergleichsdaten (4a, 4b, 4c, 4d) erfasst sind.

3. Verfahren nach Anspruch 1 oder 2, wobei die Sensordaten (100) erfasst werden, während eine Verbrennungskraftmaschine des Ego-Fahrzeugs (1, 1a) abgeschaltet und/oder abgekoppelt ist, und/oder
wobei, wenn sich einer der Vergleichssensoren in einem Fremdfahrzeug (2a, 2b, 2c, 2d) befindet, die Vergleichsdaten (4a, 4b, 4c, 4d) erfasst sind, während eine Verbrennungskraftmaschine des Fremdfahrzeugs (2a, 2b, 2c, 2d) abgeschaltet und/oder abgekoppelt ist.

4. Verfahren nach einem der Ansprüche 1 bis 3,
wobei die Sensordaten (100) eine Messreihe mit einer Vielzahl an Messwerten umfassen und ein Mittelwert (1000) über alle oder ausgewählte Messwerte gebildet wird (620); und/oder
wobei die Vergleichsdaten (4a, 4b, 4c, 4d) der Vergleichssensoren eine Vergleichsmessreihe mit einer Vielzahl an Vergleichsmesswerten umfassen und ein Mittelwert (40a, 40b, 40c, 40d) über alle oder ausgewählte Vergleichsmesswerte gebildet wird (621).

5. Verfahren nach einem der Ansprüche 1 bis 4, wobei die Sensordaten (100) mit gemittelten Vergleichsdaten (400) der Vergleichssensoren verglichen werden.

6. Verfahren nach Anspruch 5, wobei die gemittelten Vergleichsdaten (400) der Vergleichssensoren eine Abweichung von Erwartungsdaten aufweisen, die geringer als eine vorgegebene Abweichung ist.

7. Verfahren nach einem der Ansprüche 1 bis 6, weiterhin umfassend:
Kalibrieren (65) des Sensors (10) in Abhängigkeit von dem Vergleichsergebnis und/oder
Erzeugen (66) eines Steuersignals (122) für einen Antriebsstrang (14) des Ego-Fahrzeugs (1) in Abhängigkeit des Vergleichsergebnisses und/oder
Anzeigen (65, 66) einer Wartungsaufforderung und/oder einer Fehlerinformation (121).

8. Verfahren nach einem der Ansprüche 1 bis 7, wobei der Sensor (10) ein umgebungserfassender Sensor oder ein Emissionssensor ist und die Vergleichssensoren gleichartige Sensoren sind.

9. Steuergerät zum Überwachen einer Sensorfunktion eines Sensors in einem Ego-Fahrzeug, das dazu ausgebildet ist, ein Verfahren (6, 6a) nach einem der Ansprüche 1 bis 8 auszuführen.

10. Steuergerät nach Anspruch 9, wobei das Steuergerät
eine Steuereinrichtung (12) des Ego-Fahrzeugs (1) oder
eine Steuereinrichtung (91) einer Backendeinrichtung (9) ist, die eine Kommunikationseinrichtung (93) für einen Datenaustausch mit dem Ego-Fahrzeug (1a) umfasst.

## Claims

1. Method for monitoring a sensor function (10) in an ego vehicle (1, 1a), comprising:
comparing (62) sensor data (100) of the sensor (10) with comparison data (4a, 4b, 4c, 4d) of a plurality of comparison sensors located outside the ego vehicle (1, 1a), wherein the sensor data (100) are collected after the ego vehicle (1, 1a) has been parked for a predefined time period at the current position of the ego vehicle (1, 1a), and the comparison data (4a, 4b, 4c, 4d) are acquired while the comparison sensors are in a predefined area around the current position; and
assessing (63) the sensor function in accordance with a comparison result of the sensor data with the comparison data.

2. Method according to Claim 1, wherein the sensor data (100) are acquired in parallel with or with a chronological offset with respect to the comparison data (4a, 4b, 4c, 4d).

3. Method according to Claim 1 or 2, wherein the sensor data (100) are acquired while an internal combustion engine of the ego vehicle (1, 1a) is switched off and/or uncoupled, and/or
wherein if one of the comparison sensors is located in a third-party vehicle (2a, 2b, 2c, 2d), the comparison data (4a, 4b, 4c, 4d) are acquired while an internal combustion engine of the third-party vehicle (2a, 2b, 2c, 2d) is switched off and/or uncoupled.

4. Method according to one of Claims 1 to 3,
wherein the sensor data (100) comprise a measurement series with a multiplicity of measured values and a mean value (1000) is formed (620) over all the measured values or over selected measured values; and/or
wherein the comparison data (4a, 4b, 4c, 4d) of the comparison sensors comprise a comparison measuring series with a multiplicity of comparison measured values and a mean value (4a, 4b, 4c, 4d) is formed (621) over all the comparison measured values or selected comparison measured values.

5. Method according to one of Claims 1 to 4, wherein the sensor data (100) are compared with averaged comparison data (400) of the comparison sensors.

6. Method according to Claim 5, wherein the averaged comparison data (400) of the comparison sensors are different from expected data by less than a predefined difference.

7. Method according to one of Claims 1 to 6, also comprising:
calibrating (65) the sensor (10) as a function of the comparison result, and/or
generating (66) a control signal (122) for a drive train (14) of the ego vehicle (1) in accordance with the comparison result and/or
displaying (65, 66) an expected request and/or fault information (121).

8. Method according to one of Claims 1 to 7, wherein the sensor (10) is a sensor which senses the surroundings or an emission sensor, and the comparison sensors are sensors of the same type.

9. Control unit for monitoring a sensor function of a sensor in an ego vehicle, which is designed to carry out a method (6, 6a) according to one of Claims 1 to 8.

10. Control unit according to Claim 9, wherein the control unit is
a control device (12) of the ego vehicle (1) or
a control device (91) of a backend device (9) which comprises a communication device (93) for exchanging data with the ego vehicle (1a).

## Revendications

1. Procédé pour surveiller une fonction de détection d'un capteur (10) dans un véhicule à fonction égo (1, 1a), comprenant les étapes consistant à :
comparer (62) des données de capteur (100) du capteur (10) avec des données comparatives (4a, 4b, 4c, 4d) de plusieurs capteurs comparatifs situés à l'extérieur du véhicule à fonction égo (1, 1a), dans lequel les données de capteur (100) sont acquises après que le véhicule à fonction égo (1, 1a) se soit garé à la position instantanée du véhicule à fonction égo (1, 1a) pendant une période de temps prédéfinie, et les données comparatives (4a, 4b, 4c, 4d) sont acquises tandis que les capteurs comparatifs se situent dans une zone prédéfinie autour de la position instantanée ; et
évaluer (63) la fonction de détection en fonction d'un résultat de comparaison des données de capteur avec les données comparatives.

2. Procédé selon la revendication 1, dans lequel les données de capteur (100) sont acquises en parallèle ou en décalage temporel par rapport aux données comparatives (4a, 4b, 4c, 4d).

3. Procédé selon la revendication 1 ou 2, dans lequel les données de capteur (100) sont acquises tandis qu'un moteur à combustion interne du véhicule à fonction égo (1, 1a) est arrêté et/ou découplé, et/ou dans lequel, lorsque l'un des capteurs comparatifs se situe dans un véhicule étranger (2a, 2b, 2c, 2d), les données comparatives (4a, 4b, 4c, 4d) sont acquises tandis qu'un moteur à combustion interne du véhicule étranger (2a, 2b, 2c, 2d) est arrêté et/ou découplé.

4. Procédé selon l'une des revendications 1 à 3,
dans lequel les données de capteur (100) comprennent une série de mesures comportant une pluralité de valeurs de mesure, et une valeur moyenne (1000) est calculée (620) sur toutes les valeurs de mesure ou sur des valeurs de mesure sélectionnées ; et/ou
dans lequel les données comparatives (4a, 4b, 4c, 4d) des capteurs comparatifs comprennent une série de mesures comparatives comportant une pluralité de valeurs de mesure comparatives, et une valeur moyenne (40a, 40b, 40c, 40d) est calculée (621) sur toutes les valeurs de mesure comparatives ou sur des valeurs de mesure comparatives sélectionnées.

5. Procédé selon l'une des revendications 1 à 4, dans lequel les données de capteur (100) sont comparées à des données comparatives moyennées (400) des capteurs comparatifs.

6. Procédé selon la revendication 5, dans lequel les données comparatives moyennées (400) des capteurs comparatifs présentent un écart par rapport à des données attendues qui est inférieur à un écart prédéterminé.

7. Procédé selon l'une des revendications 1 à 6, comprenant en outre les étapes consistant à :
étalonner (65) le capteur (10) en fonction du résultat de la comparaison et/ou
générer (66) un signal de commande (122) pour un groupe motopropulseur (14) du véhicule à fonction égo (1) en fonction du résultat de la comparaison et/ou afficher (65, 66) une demande de maintenance et/ou une information d'erreur (121).

8. Procédé selon l'une quelconque des revendications 1 à 7, dans lequel le capteur (10) est un capteur d'acquisition de l'environnement ou un capteur d'émission et les capteurs comparatifs sont des capteurs de même type.

9. Appareil de commande pour surveiller une fonction de détection d'un capteur dans un véhicule à fonction égo, qui est conçu pour mettre en œuvre un procédé (6, 6a) selon l'une des revendications 1 à 8.

10. Appareil de commande selon la revendication 9, dans lequel l'appareil de commande est
un appareil de commande (12) du véhicule à fonction égo (1) ou
un appareil de commande (91) d'un dispositif dorsal (9) qui comprend un dispositif de communication (93) permettant un échange de données avec le véhicule à fonction égo (1a).
